# EUROPEAN PATENT SPECIFICATION

(11) **EP 3 434 999 B1**
(45) Date of publication and mention of the grant of the patent: **08.11.2023**
(21) Application number: 18185503.2
(22) Date of filing: 25.07.2018
(51) Int. Cl.: F25B 1/10, F25B 9/00, F25B 9/08, F25B 30/02, F25B 31/00

(54) **REFRIGERATION CYCLE APPARATUS**
KÄLTEKREISLAUFVORRICHTUNG
APPAREIL DE CYCLE DE RÉFRIGÉRATION

(30) Priority: 27.07.2017 JP 2017145170
(43) Date of publication of application: 30.01.2019
(73) Proprietor: Panasonic Intellectual Property Management Co., Ltd., Osaka-shi, Osaka 540-6207 (JP)
(72) Inventor: KAWANO, Bunki, OSAKA, 540-6207 (JP); TAMURA, Tomoichiro, OSAKA, 540-6207 (JP)
(74) Representative: Eisenführ Speiser

(56) References cited:
- WO-A1-2017/148934
- CN-A- 106 104 170
- JP-A- S6 387 557
- JP-A- S58 214 697
- JP-A- S61 159 053
- US-A- 5 884 498
- US-A- 6 038 875
- US-A1- 2010 115 975
- US-A1- 2011 203 304

## Description

### BACKGROUND

### 1. Technical Field

The present invention relates to refrigeration cycle apparatuses.

### 2. Description of the Related Art

A refrigeration cycle apparatus that includes compressors at two stages, where refrigerant vapor discharged from the compressor at the first stage is cooled before being sucked into the compressor at the second stage, is known as a typical refrigeration cycle apparatus.

As illustrated in Fig. 12, an air conditioner 500 described in Japanese Unexamined Patent Application Publication No. 2008-122012 includes an evaporator 510, a centrifugal compressor 531, a vapor cooler 533, a Roots compressor 532, and a condenser 520. The centrifugal compressor 531 is provided at a previous stage and the Roots compressor 532 is provided at a later stage. The evaporator 510 generates refrigerant vapor in a saturated state. The refrigerant vapor is sucked into the centrifugal compressor 531 to be compressed. The refrigerant vapor compressed in the centrifugal compressor 531 is further compressed in the Roots compressor 532. The refrigerant vapor is cooled in the vapor cooler 533 arranged between the centrifugal compressor 531 and the Roots compressor 532.

The vapor cooler 533 is provided between the centrifugal compressor 531 and the Roots compressor 532. In the vapor cooler 533, water is directly sprayed to the refrigerant vapor. In another case, heat exchange is indirectly performed between a cooling medium, such as air, and the refrigerant vapor in the vapor cooler 533.

US patent 6,038,875 discloses vapor compression systems and methods for operating such systems, directed at controlling the wetness of refrigerant discharged from an evaporator into a receiver. The document states, that this effect may be ensured by the controlled steady removal of a small quantity of liquid refrigerant from the receiver, in proportion to the amount of refrigerant that is removed from the receiver as vapor, so as to control the wetness of the refrigerant discharged to the receiver from the evaporator, to ensure that it is wet under normal operating conditions. Said receiver includes a reservoir for liquid refrigerant, a vapor withdrawal conduit through which refrigerant vapor is supplied from the receiver to the compressor and a liquid withdrawal conduit through which liquid refrigerant is supplied from the reservoir to the compressor.

US patent application 2010/0115975 discloses a refrigerant vapor compression system which includes a flash tank economizer defining a separation chamber, that is disposed in the refrigerant circuit intermediate a refrigerant heat rejection heat exchanger and a refrigerant heat absorption heat exchanger. A refrigerant vapor injection line establishes refrigerant flow communication between an upper portion of the separation chamber and an intermediate pressure stage of the system's compression device and the suction pressure portion of the refrigerant circuit. A refrigerant liquid injection line establishes refrigerant flow communication between a lower portion of said separation chamber and an intermediate pressure stage of the compression device and the suction pressure portion of the refrigerant circuit.

US patent application 2011/0203304 A1 discloses a refrigeration cycle apparatus according to the preamble of claim 1, and discloses a construction directed to prevent the decline in the volumetric efficiency and the decline in the performance of a heat pump having a reciprocating compressor integrated therein by decreasing the temperature of discharge gas in the reciprocating compressor. A heat pump unit disclosed therein constitutes a heat pump cycle in which the reciprocating compressor, a condenser, an expansion valve and an evaporator are interposed in a refrigerant circulating path. The refrigerant circulating path comprises a refrigerant liquid returning path for returning a portion of the refrigerant liquid having been condensed by the condenser to a discharge chamber provided in a cylinder assembly of the reciprocating compressor, so that a portion of the refrigerant liquid is supplied to a discharge chamber by the refrigerant liquid returning path and the discharge gas passageway is cooled by evaporative latent heat of the refrigerant liquid.

JP S61 159053 A discloses a refrigeration cycle apparatus according to the preamble of claim 1, and describes a heat pump with a compressor, a condenser, an evaporator, a decompression mechanism and a refrigerant path connecting these devices. A stabilizer that prevents decomposition by heat is added to the refrigerant, whereby the refrigerant in the evaporator is supplied to a part of the refrigerant flow path from the outlet of the evaporator to the outlet of the compressor.

### SUMMARY

According to the techniques described in Japanese Unexamined Patent Application Publication No. 2008-122012, in the vapor cooler 533, the degree of superheat of the refrigerant to be sucked into the Roots compressor 532 can be decreased. However, neither the degree of superheat that occurs in a compression process of the centrifugal compressor 531 nor the degree of superheat that occurs in a compression process of the Roots compressor 532 can be removed in the compression process.

One non-limiting and exemplary embodiment provides a refrigeration cycle apparatus increased in efficiency by removing the degree of superheat that occurs in a compression process in a compression process.

The invention disclosed here features a refrigeration cycle apparatus including: an evaporator that evaporates a liquid phase refrigerant to generate a gas phase refrigerant; a first compressor that is connected to the evaporator directly and sucks the gas phase refrigerant not compressed after being generated in the evaporator; a condenser that condenses the gas phase refrigerant compressed in the first compressor to generate the liquid phase refrigerant; a first atomization mechanism that is arranged in the evaporator and sprays the liquid phase refrigerant to an inlet of the first compressor; and a first refrigerant supply passage that connects the evaporator or the condenser with the first atomization mechanism, wherein the first atomization mechanism is a spray nozzle, such as a single-fluid atomization nozzle, a swirl nozzle, a two-fluid nozzle, or an ultrasonic nozzle.

The present invention can increase the efficiency of a refrigeration cycle apparatus by removing the degree of superheat that occurs in a compression process in the compression process.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a structural diagram of a refrigeration cycle apparatus according to a first embodiment not in accordance with the present invention;
Fig. 2 is a cross-sectional view of an example of an atomization mechanism;
Fig. 3 is a cross-sectional view of a compressor of the refrigeration cycle apparatus illustrated in Fig. 1;
Fig. 4 is a structural diagram of a refrigeration cycle apparatus according to a second embodiment not in accordance with the present invention;
Fig. 5 is a structural diagram of a refrigeration cycle apparatus according to a third embodiment in accordance with the present invention;
Fig. 6 is a structural diagram of a refrigeration cycle apparatus according to a fourth embodiment not in accordance with the present invention;
Fig. 7 is a structural diagram of a refrigeration cycle apparatus according to a fifth embodiment not in accordance with the present invention;
Fig. 8 is a structural diagram of a refrigeration cycle apparatus according to a sixth embodiment not in accordance with the present invention;
Fig. 9 is a structural diagram of a refrigeration cycle apparatus according to a seventh embodiment not in accordance with the present invention;
Fig. 10 is a structural diagram of a refrigeration cycle apparatus according to an eighth embodiment not in accordance with the present invention;
Fig. 11A illustrates a variation, not in accordance with the present invention, that relates to the arrangement of the atomization mechanism;
Fig. 11B illustrates another variation, not in accordance with the present invention, that relates to the arrangement of the atomization mechanism; and

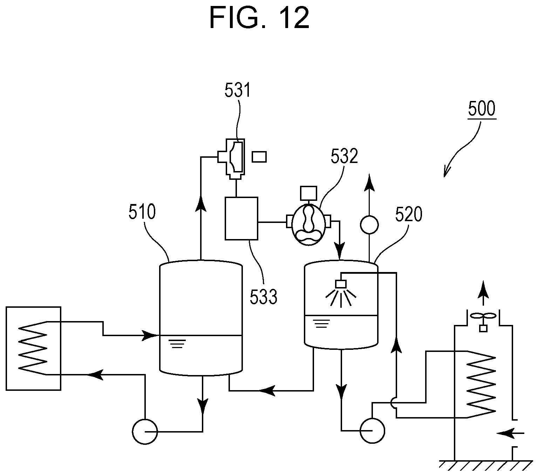

Fig. 12 is a structural diagram of a typical air conditioner.

### DETAILED DESCRIPTION

### Underlying Knowledge Forming Basis of Present Disclosure

In the air conditioner described in Japanese Unexamined Patent Application Publication No. 2008-122012, the degree of superheat of the refrigerant sucked into the Roots compressor 532 can be decreased in the vapor cooler 533. However, neither the degree of superheat that occurs in a compression process of the centrifugal compressor 531 nor the degree of superheat that occurs in a compression process of the Roots compressor 532 can be removed in the compression process. With increase in the degree of superheat of the refrigerant, the enthalpy of the refrigerant increases as well.

An ideal compression process in a compressor goes along an isentropic curve of complete thermal insulation. In a p-h diagram of a refrigerant, as the enthalpy of the refrigerant increases, the inclination of the isentropic curve becomes gentler and the larger power is desired for compression. As the degree of superheat of the refrigerant increases, the larger compression power is needed so as to increase the pressure of the refrigerant of a unit mass to a predetermined pressure. In other words, the load of the compressor increases and the power consumption of the compressor increases.

A refrigeration cycle apparatus according to the present invention includes:
an evaporator that evaporates a liquid phase refrigerant to generate a gas phase refrigerant,
a first compressor that is connected to the evaporator directly and sucks the gas phase refrigerant not compressed after being generated in the evaporator;
a condenser that condenses the gas phase refrigerant compressed in the first compressor to generate the liquid phase refrigerant;
a first atomization mechanism that is arranged in the evaporator and sprays the liquid phase refrigerant to an inlet of the first compressor; and
a first refrigerant supply passage that connects the evaporator or the condenser with the first atomization mechanism. The first atomization mechanism is a spray nozzle, such as a single-fluid atomization nozzle, a swirl nozzle, a two-fluid nozzle, or an ultrasonic nozzle.

According to the invention, into the first compressor, the mist-like liquid phase refrigerant generated in the first atomization mechanism is sucked together with the gas phase refrigerant generated in the evaporator. When the mist-like liquid phase refrigerant is sucked into the first compressor, heat exchange is caused between the gas phase refrigerant, which has a temperature increased by the first compressor raising the pressure, and the mist-like liquid phase refrigerant and the gas phase refrigerant in an overheated state is continuously cooled through the evaporation of the mist-like liquid phase refrigerant. Accordingly, increase in the enthalpy of the refrigerant caused by increase in the degree of superheat of the refrigerant in a compression process can be continuously inhibited. The compression power that the first compressor needs can be reduced to be less than the compression power needed in an isentropic compression under complete thermal insulation. The work desired for the compressor to raise the pressure of the refrigerant to a predetermined pressure can be greatly reduced. That is, the power consumption of the first compressor can be greatly lessened. As a result, the efficiency of the refrigeration cycle apparatus can be increased.

According to a first embodiment, for example, the first refrigerant supply passage of the refrigeration cycle apparatus according to the invention may connect the evaporator with the first atomization mechanism, and the liquid phase refrigerant sprayed from the first atomization mechanism may be the liquid phase refrigerant stored in the evaporator. The mist-like liquid phase refrigerant with a temperature approximately the same as the temperature (saturation temperature) of the gas phase refrigerant sucked into the first compressor is sucked into the first compressor. In this case, flush evaporation of the liquid phase refrigerant and sudden rise of the evaporation amount in the first compressor can be prevented. As a result, increase in compression power caused by the increase in the evaporation amount can be inhibited.

According to a second embodiment, for example, the first refrigerant supply passage of the refrigeration cycle apparatus according to the invention may connect the condenser with the first atomization mechanism, and the liquid phase refrigerant sprayed from the first atomization mechanism may be the liquid phase refrigerant stored in the condenser. The mist-like liquid phase refrigerant with a temperature higher than the temperature (saturation temperature) of the gas phase refrigerant sucked into the first compressor is sucked into the first compressor. In this case, the mechanism according to the invention can bring the effect of reducing compression power while preventing the gas phase refrigerant from being cooled excessively and being condensed in the first compressor.

According to a third embodiment, for example, the refrigeration cycle apparatus according to the invention or any of the first and second embodiments may further include: a second compressor that sucks the gas phase refrigerant compressed by the first compressor to further compress the gas phase refrigerant; and a second atomization mechanism that is arranged on a second vapor passage extending from the outlet of the first compressor to an outlet of the second compressor and sprays the liquid phase refrigerant into the second vapor passage. Also in the second compressor, the increase in the enthalpy of the refrigerant caused by the increase in the degree of superheat of the refrigerant in a compression process can be continuously inhibited. The compression power that the second compressor needs can be reduced to be less than the compression power needed in an isentropic compression under complete thermal insulation. The work desired for the second compressor to raise the pressure of the refrigerant to a predetermined pressure can be greatly reduced. That is, the power consumption of the second compressor can be greatly lessened. As a result, the efficiency of the refrigeration cycle apparatus can be increased.

According to a fourth embodiment, for example, the refrigeration cycle apparatus according to the third embodiment may further include a second refrigerant supply passage that connects at least one selected from the evaporator, the condenser, and a buffer tank leading to each of the evaporator and the condenser and storing the liquid phase refrigerant with the second atomization mechanism. The liquid phase refrigerant can be surely supplied to the second atomization mechanism through the second refrigerant supply passage.

According to a fifth embodiment, for example, the second refrigerant supply passage of the refrigeration cycle apparatus according to the fourth embodiment may connect the evaporator with the second atomization mechanism, and the liquid phase refrigerant sprayed from the second atomization mechanism is the liquid phase refrigerant stored in the evaporator. The mist-like liquid phase refrigerant with a temperature lower than the temperature of the gas phase refrigerant sucked into the second compressor is sucked into the second compressor. In this case, flush evaporation of the liquid phase refrigerant and sudden rise of the evaporation amount in the second compressor can be prevented.

According to a sixth embodiment, for example, the second refrigerant supply passage of the refrigeration cycle apparatus according to the fourth embodiment may connect the condenser with the second atomization mechanism, and the liquid phase refrigerant sprayed from the second atomization mechanism may be the liquid phase refrigerant stored in the condenser. The mist-like liquid phase refrigerant with a temperature equal to or higher than the saturation temperature of the gas phase refrigerant sucked into the second compressor is sucked into the second compressor. In this case, the gas phase refrigerant can be prevented from being cooled excessively and being condensed in the second compressor.

According to a seventh embodiment, for example, the second refrigerant supply passage of the refrigeration cycle apparatus according to the fourth embodiment may connect the buffer tank with the second atomization mechanism, and the liquid phase refrigerant sprayed from the second atomization mechanism may be the liquid phase refrigerant stored in the buffer tank. Into the second compressor, particles of the liquid phase refrigerant stored in the buffer tank are sucked. The difference between the temperature of the liquid phase refrigerant stored in the buffer tank and the saturation temperature of the gas phase refrigerant in the second compressor is zero or sufficiently small. Accordingly, the gas phase refrigerant can be prevented from being cooled excessively and being condensed in the second compressor, and flush evaporation of the liquid phase refrigerant and sudden rise of the evaporation amount in the second compressor can be prevented.

According to an eight embodiment, for example, the first refrigerant supply passage of the refrigeration cycle apparatus according to the fifth aspect may connect the condenser with the first atomization mechanism, the second refrigerant supply passage may branch from the first refrigerant supply passage to connect the condenser with the second atomization mechanism, and the liquid phase refrigerant sprayed from each of the first atomization mechanism and the second atomization mechanism may be the liquid phase refrigerant stored in the condenser. The mist-like liquid phase refrigerant with a temperature equal to or higher than the saturation temperature of the gas phase refrigerant sucked into the first compressor is sucked into the first compressor. In this case, the gas phase refrigerant can be prevented from being cooled excessively and being condensed in the first compressor. Similarly, the mist-like liquid phase refrigerant with a temperature equal to or higher than the saturation temperature of the gas phase refrigerant sucked into the second compressor is sucked into the second compressor. In this case, the gas phase refrigerant can be prevented from being cooled excessively and being condensed in the second compressor. The mechanism according to the invention can surely bring the effect of reducing compression power to both the first compressor and the second compressor.

Embodiments of the present disclosure are described below with reference to the drawings. The scope of the present invention is solely defined by the appended claims.

### First Embodiment not in accordance with the present invention

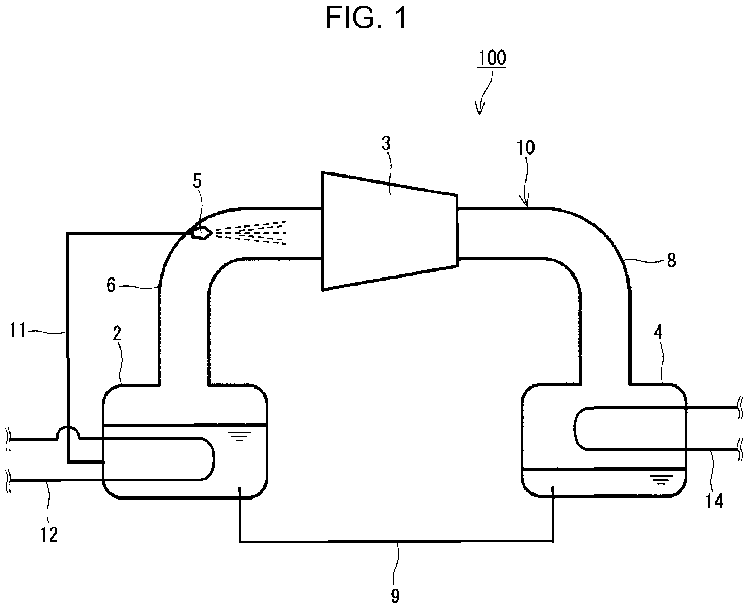

As illustrated in Fig. 1, a refrigeration cycle apparatus 100 according to the present embodiment includes an evaporator 2, a first compressor 3, a condenser 4, a first atomization mechanism 5, and a first refrigerant supply passage 11. The first compressor 3 is connected to the evaporator 2 through a suction pipe 6 and connected to the condenser 4 through a discharge pipe 8. Specifically, the suction pipe 6 is connected to the outlet of the evaporator 2 and the inlet of the first compressor 3. The discharge pipe 8 is connected to the outlet of the first compressor 3 and the inlet of the condenser 4. The condenser 4 is connected to the evaporator 2 through a return passage 9. The return passage 9 is constituted of at least one pipe. The evaporator 2, the first compressor 3, and the condenser 4 are connected in this order in a loop to form a refrigerant circuit 10.

A refrigerant evaporates in the evaporator 2 and a gas phase refrigerant (refrigerant vapor) is generated. The gas phase refrigerant generated in the evaporator 2 is sucked into the first compressor 3 through the suction pipe 6 to be compressed. The compressed gas phase refrigerant is supplied to the condenser 4 through the discharge pipe 8. In the condenser 4, the gas phase refrigerant is cooled and a liquid phase refrigerant (refrigerant liquid) is generated. The liquid phase refrigerant is transferred from the condenser 4 to the evaporator 2 through the return passage 9.

The refrigeration cycle apparatus 100 is filled with a refrigerant of a single sort. As the refrigerant, a fluorocarbon-based refrigerant, a low global warming potential (GWP) refrigerant, and a natural refrigerant can be used. Examples of the fluorocarbon-based refrigerant include hydrochlorofluorocarbon (HCFC) and hydrofluorocarbon (HFC). Examples of the low GWP refrigerant include HFO-1234yf. Examples of the natural refrigerant include CO₂ and water.

The refrigeration cycle apparatus 100 is desirably filled with a refrigerant that, as a principal ingredient, contains a substance whose saturated vapor pressure is a negative pressure at ordinary temperature specified as 20°C ± 15°C in JIS Z8703 of Japanese Industrial Standards (JIS), which is a pressure lower than the atmospheric pressure when measured as an absolute pressure. Examples of such a refrigerant include a refrigerant that contains water as a principal ingredient. The "principal ingredient" indicates an ingredient that is contained the most at a mass ratio.

When water is used as the refrigerant, the pressure ratio in the refrigeration cycle may increase and the degree of superheat of the refrigerant is likely to grow excessively large. By the first compressor 3 sucking the gas phase refrigerant generated in the evaporator 2 and the mist-like liquid phase refrigerant generated in the first atomization mechanism 5, increase in the enthalpy of the refrigerant caused by the increase in the degree of superheat of the refrigerant in a compression process can be continuously inhibited. Thus, the work desired for the first compressor 3 to raise the pressure of the refrigerant to a predetermined pressure can be greatly reduced. That is, the power consumption of the first compressor 3 can be greatly lessened.

The refrigeration cycle apparatus 100 further includes a heat absorption circuit 12 and a heat radiation circuit 14.

The heat absorption circuit 12 is a circuit for using the liquid phase refrigerant cooled in the evaporator 2 and includes necessary equipment, such as a pump and an indoor heat exchanger. Part of the heat absorption circuit 12 is positioned in the evaporator 2. In the evaporator 2, part of the heat absorption circuit 12 may be positioned above the liquid level of the liquid phase refrigerant or may be positioned below the liquid level of the liquid phase refrigerant. The heat absorption circuit 12 is filled with a heat medium, such as water or brine.

The liquid phase refrigerant stored in the evaporator 2 is in contact with a member (pipe), which is a constituent of the heat absorption circuit 12. Accordingly, heat exchange is performed between the liquid phase refrigerant and the heat medium in the heat absorption circuit 12 and the liquid phase refrigerant evaporates. The heat medium in the heat absorption circuit 12 is cooled by the evaporation latent heat of the liquid phase refrigerant. When, for example, the refrigeration cycle apparatus 100 is an air conditioner that cools the interior of a room, the heat medium of the heat absorption circuit 12 serves to cool the air in the room. The indoor heat exchanger is a fin and tube heat exchanger for example.

The heat radiation circuit 14 is a circuit used so as to remove heat from the refrigerant in the condenser 4 and includes necessary equipment, such as a pump and a cooling tower. Part of the heat radiation circuit 14 is positioned in the condenser 4. Specifically, in the condenser 4, part of the heat radiation circuit 14 is positioned above the liquid level of the liquid phase refrigerant. The heat radiation circuit 14 is filled with a heat medium, such as water or brine. When, for example, the refrigeration cycle apparatus 100 is an air conditioner that cools the interior of a room, the condenser 4 is arranged outdoors and the heat medium of the heat radiation circuit 14 serves to cool the refrigerant of the condenser 4.

The high-temperature gas phase refrigerant discharged from the first compressor 3 comes into contact with a member (pipe), which is a constituent of the heat radiation circuit 14, in the condenser 4. Accordingly, heat exchange is performed between the gas phase refrigerant and the heat medium in the heat radiation circuit 14 and the gas phase refrigerant condenses. The heat medium in the heat radiation circuit 14 is heated by the condensation latent heat of the gas phase refrigerant. The heat medium heated by the gas phase refrigerant is cooled, for example, in the cooling tower (not illustrated) of the heat radiation circuit 14 by the outside air or cooling water.

The evaporator 2 is constituted of a container for example, which has thermal insulation properties and resistance to pressure. The evaporator 2 stores a liquid phase refrigerant and evaporates the liquid phase refrigerant in the evaporator 2. The liquid phase refrigerant in the evaporator 2 absorbs heat brought from the outside of the evaporator 2 and evaporates. That is, the liquid phase refrigerant heated by absorbing heat from the heat absorption circuit 12 evaporates in the evaporator 2. In the present embodiment, the liquid phase refrigerant stored in the evaporator 2 is in contact indirectly with the heat medium that circulates in the heat absorption circuit 12. In other words, part of the liquid phase refrigerant stored in the evaporator 2 is heated by the heat medium of the heat absorption circuit 12 and is used so as to heat the liquid phase refrigerant in a saturated state. The temperature of the liquid phase refrigerant stored in the evaporator 2 and the temperature of the gas phase refrigerant generated in the evaporator 2 are each 5°C for example.

In the present embodiment, the evaporator 2 is an indirect contact heat exchanger, such as a shell and tube heat exchanger. The evaporator 2 may be a direct contact heat exchanger, such as a spray or filler heat exchanger. That is, the liquid phase refrigerant may be heated by causing a liquid phase refrigerant to circulate in the heat absorption circuit 12. The heat absorption circuit 12 may be omitted.

The first compressor 3 sucks the gas phase refrigerant generated in the evaporator 2 to compress the gas phase refrigerant. Any device that exerts a compression action on the gas phase refrigerant is not arranged between the outlet of the evaporator 2 and the inlet of the first compressor 3. The gas phase refrigerant to be sucked into the first compressor 3 is the gas phase refrigerant that is not compressed after being generated in the evaporator 2. The pressure of the gas phase refrigerant sucked into the first compressor 3 is equal to or slightly lower than the pressure of the gas phase refrigerant that fills the inside of the evaporator 2. The first compressor 3 is a dynamic compressor for example. The dynamic compressor is a compressor that raises the pressure of a gas phase refrigerant by applying momentum to the gas phase refrigerant and then reducing the speed. Examples of the dynamic compressor include a centrifugal compressor, a mixed flow compressor, and an axial flow compressor. The dynamic compressor is also called a turbo-compressor. The first compressor 3 may include a variable-speed mechanism for changing the number of revolutions. Examples of the variable-speed mechanism include an inverter that drives the motor of the first compressor 3. The temperature of the refrigerant at the outlet of the first compressor 3 is, for example, in a range from 100°C to 150°C. The first compressor 3 may be a displacement compressor. Examples of the displacement compressor include a reciprocating compressor, a rotary compressor, a scroll compressor, and a screw compressor.

The condenser 4 is constituted of a container for example, which has thermal insulation properties and resistance to pressure. The condenser 4 condenses the gas phase refrigerant compressed in the first compressor 3 and stores the liquid phase refrigerant caused by condensing the gas phase refrigerant. In the present embodiment, the gas phase refrigerant is in contact indirectly with the heat medium cooled by releasing heat to an external environment to be condensed. That is, the gas phase refrigerant is cooled by the heat medium of the heat radiation circuit 14 to be condensed. The temperature of the gas phase refrigerant guided to the condenser 4 is, for example, in a range from 100°C to 150°C. The temperature of the liquid phase refrigerant stored in the condenser 4 is 35°C for example.

In the present embodiment, the condenser 4 is an indirect contact heat exchanger, such as a shell and tube heat exchanger. The condenser 4 may be a direct contact heat exchanger, such as a spray or filler heat exchanger. That is, the liquid phase refrigerant may be cooled by causing the liquid phase refrigerant to circulate in the heat radiation circuit 14. The heat radiation circuit 14 may be omitted.

The suction pipe 6 is a channel for guiding the gas phase refrigerant from the evaporator 2 to the first compressor 3. The outlet of the evaporator 2 is connected to the inlet of the first compressor 3 through the suction pipe 6.

The discharge pipe 8 is a channel for guiding the compressed gas phase refrigerant from the first compressor 3 to the condenser 4. The outlet of the first compressor 3 is connected to the inlet of the condenser 4 through the discharge pipe 8.

The first atomization mechanism 5 is a spray nozzle that atomizes a liquid phase refrigerant and sprays the liquid phase refrigerant. The first atomization mechanism 5 is arranged on a first vapor passage extending from the inlet of the suction pipe 6 to the outlet of the first compressor 3. In the present embodiment, the first atomization mechanism 5 is attached to the suction pipe 6. The suction pipe 6 constitutes part of the first vapor passage. That is, the first atomization mechanism 5 is arranged on the first vapor passage and sprays the liquid phase refrigerant into the first vapor passage. The first atomization mechanism 5 is directed, for example, toward the inlet of the first compressor 3. In this case, the mist-like liquid phase refrigerant generated in the first atomization mechanism 5 can be surely sucked into the first compressor 3. When the suction pipe 6 is bent like the letter L, the first atomization mechanism 5 sprays the liquid phase refrigerant into a straight portion that is included in the suction pipe 6 and leads to the first compressor 3. Thus, the number of particles of the liquid phase refrigerant that collide with the interior wall face of the suction pipe 6 can be reduced.

In the present embodiment, the first refrigerant supply passage 11 connects the evaporator 2 with the first atomization mechanism 5. Through the first refrigerant supply passage 11, the liquid phase refrigerant stored in the evaporator 2 is supplied to the first atomization mechanism 5. The first refrigerant supply passage 11 can be constituted of at least one pipe. In the evaporator 2, the inlet of the first refrigerant supply passage 11 is positioned below the liquid level of the liquid phase refrigerant stored in the evaporator 2. The first refrigerant supply passage 11 may be provided with a pump, a valve, or the like.

The refrigeration cycle apparatus 100 may include a reserve tank that stores the liquid phase refrigerant. The reserve tank is connected to the evaporator 2 for example. The liquid phase refrigerant is transferred from the evaporator 2 to the reserve tank. The first refrigerant supply passage 11 connects the reserve tank with the first atomization mechanism 5 so that the liquid phase refrigerant is supplied from the reserve tank to the first atomization mechanism 5. The reserve tank may be connected to the suction pipe 6. In this case, the reserve tank may store the liquid phase refrigerant supplied from the inside of the refrigeration cycle or may store the liquid phase refrigerant generated by being cooled by an external heat source through the inner peripheral face of the suction pipe 6 or the like.

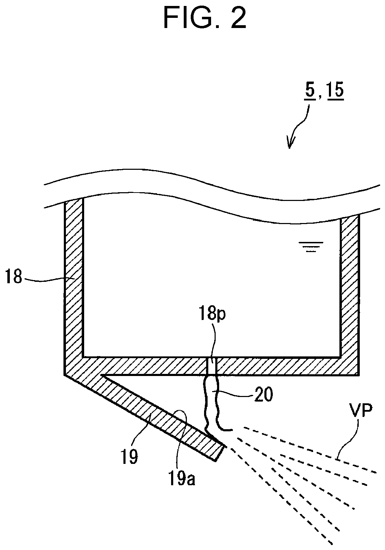

As illustrated in Fig. 2, the first atomization mechanism 5 can be a single-fluid atomization nozzle that atomizes a liquid phase refrigerant in a liquid phase state. The first atomization mechanism 5 includes a nozzle body 18, an injection outlet 18p, and a collision part 19. The nozzle body 18 is a tubular part connected to an end of the first refrigerant supply passage 11. The injection outlet 18p is provided in a top end portion of the nozzle body 18. A plurality of injection outlets 18p may be provided in the nozzle body 18. The injection outlet 18p may be a very small hole (orifice). The collision part 19 is arranged on the central axis of the injection outlet 18p. The collision part 19 includes a collision face 19a, which is a plane inclined in relation to the central axis of the injection outlet 18p. When the liquid phase refrigerant passes through the injection outlet 18p, a jet 20 of the liquid phase refrigerant is generated. By the jet 20 colliding with the collision part 19, the liquid phase refrigerant is atomized and a flow VP of the particles of the liquid phase refrigerant is formed. The flow VP of the particles of the liquid phase refrigerant proceeds in the inclination direction of the collision face 19a.

A particle of the liquid phase refrigerant sprayed from the first atomization mechanism 5 desirably has a size that enables heat exchange to be performed efficiently between the gas phase refrigerant and the particles of the liquid phase refrigerant. The particle size of the liquid phase refrigerant is, for example, in a range from 1 µm to 10 µm.

The structure of the first atomization mechanism 5 is not limited to the structure illustrated in Fig. 2. As the first atomization mechanism 5, a spray nozzle can be used, such as a swirl nozzle, a two-fluid nozzle, or an ultrasonic nozzle. The swirl nozzle is a spray nozzle that atomizes a liquid using centrifugal force. The two-fluid nozzle is a spray nozzle that atomizes a liquid using a relative speed of the flow of the liquid and the flow of a gas. The ultrasonic nozzle is a spray nozzle that atomizes a liquid using ultrasonic waves.

The return passage 9 is a channel for guiding the liquid phase refrigerant from the condenser 4 to the evaporator 2. The return passage 9 connects the evaporator 2 with the condenser 4. The return passage 9 may be provided with a pump, a flow rate adjusting valve, or the like. The return passage 9 can be constituted of at least one pipe.

A structure of the first compressor 3 is described in detail below.

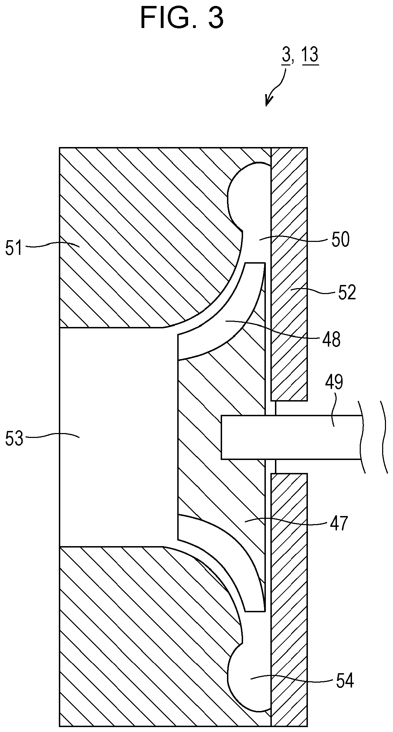

As illustrated in Fig. 3, the first compressor 3 includes an impeller 47, a rotation shaft 49, a diffuser 50, a volute 51, and a housing 52.

The impeller 47 is attached to the rotation shaft 49 and rotates at high speed. The numbers of revolutions of the impeller 47 and the rotation shaft 49 are each, for example, in a range from 5000 rpm to 100000 rpm. The impeller 47 is made from a material, such as aluminum, duralumin, iron, or ceramics. The rotation shaft 49 is made from an iron-based material with high strength, such as S45CH. The impeller 47 includes a plurality of blades arranged along the circumferential direction. An interblade channel 48 is formed between the blades next to each other. When the impeller 47 rotates, speed in the rotation direction is given to the gas phase refrigerant that flows through each of the plurality of interblade channels 48.

The diffuser 50 is a channel for guiding the gas phase refrigerant accelerated in the rotation direction by the impeller 47 to the discharge space 54. The channel cross-sectional area of the diffuser 50 enlarges from the interblade channel 48 to the discharge space 54. This structure reduces the flow velocity of the gas phase refrigerant accelerated by the impeller 47 and raises the pressure of the gas phase refrigerant. The diffuser 50 is a vaneless diffuser constituted of for example, a channel that extends in a radial direction. To raise the pressure of the refrigerant effectively, the diffuser 50 may be a vaned diffuser that includes a plurality of vanes and a plurality of channels partitioned thereby.

The volute 51 is a component that forms a suction space 53 and the discharge space 54. The suction space 53 is a channel for guiding the gas phase refrigerant to be compressed to the impeller 47. The suction space 53 is positioned upstream of the impeller 47 and surrounded by a tubular shroud wall, which is the inner peripheral face of the volute 51. The discharge space 54 is a space where the gas phase refrigerant that passes through the diffuser 50 is gathered. The compressed gas phase refrigerant passes through the discharge space 54 to be guided to the outside of the first compressor 3 (to the discharge pipe 8). The cross-sectional area of the discharge space 54 enlarges along the circumferential direction and accordingly, the flow velocity and angular momentum of the gas phase refrigerant in the discharge space 54 are maintained at substantially constant values. The volute 51 is made from an iron-based material or an aluminum-based material. Examples of the iron-based material include FC250, FCD400, and SS400. Examples of the aluminum-based material include ACD12.

The housing 52 serves as a casing that accommodates various components of the first compressor 3 and forms the diffuser 50. Specifically, when the volute 51 and the housing 52 are combined, the diffuser 50 and the discharge space 54 are formed. The housing 52 can be made from the above-mentioned iron-based material or aluminum-based material. When the diffuser 50 is a vaned diffuser, the plurality of vanes can also be made from the above-mentioned iron-based material or aluminum-based material.

Upstream of the suction space 53, an inlet guide vane (IGV) may be provided.

Described below are the operation and action of the refrigeration cycle apparatus 100.

When the refrigeration cycle apparatus 100 is left for a certain period (e.g. during the night), the temperature in the refrigeration cycle apparatus 100 (the refrigerant circuit 10) balances the ambient temperature approximately. The pressure in the refrigeration cycle apparatus 100 balances a specific pressure. When the first compressor 3 is started, the pressure in the evaporator 2 gradually lowers and the liquid phase refrigerant evaporates through heat absorption from the heat medium of the heat absorption circuit 12 that exchanges heat with the inside air to generate a gas phase refrigerant. The gas phase refrigerant is sucked into the first compressor 3 to be compressed and is discharged from the first compressor 3. The high-pressure gas phase refrigerant is guided to the condenser 4 to be condensed by the gas phase refrigerant radiating heat to the outside air or the like through the heat radiation circuit 14, and a liquid phase refrigerant is generated. The liquid phase refrigerant is transferred from the condenser 4 to the evaporator 2 through the return passage 9.

Together with the gas phase refrigerant generated in the evaporator 2, the mist-like liquid phase refrigerant generated in the first atomization mechanism 5 is sucked into the first compressor 3. When the mist-like liquid phase refrigerant is sucked into the first compressor 3, heat exchange is caused between the gas phase refrigerant with a temperature increased by the first compressor 3 raising the pressure and the mist-like liquid phase refrigerant, and the gas phase refrigerant in an overheated state is continuously cooled through the evaporation of the mist-like liquid phase refrigerant. Thus, increase in the enthalpy of the refrigerant caused by increase in the degree of superheat of the refrigerant in a compression process can be continuously inhibited. The compression power that the first compressor 3 needs can be reduced to be less than the compression power needed in an isentropic compression under complete thermal insulation. The work desired for the first compressor 3 to raise the pressure of the refrigerant to a predetermined pressure can be greatly reduced. That is, the power consumption of the first compressor 3 can be greatly lessened. As a result, the efficiency of the refrigeration cycle apparatus 100 can be increased.

The structure illustrated in Fig. 2 can blow the particles of the liquid phase refrigerant in the inclination direction of the collision face 19a with a concentration. When, for example, a swirl nozzle is used for the first atomization mechanism 5, the particles of the liquid phase refrigerant are spread over a wide range and most of the particles can possibly collide with the interior wall face of the suction pipe 6 or the interior wall face of the first compressor 3. In this case, the number of particles of the liquid phase refrigerant used for the continuous cooling of the gas phase refrigerant is decreased. The structure according to the present embodiment can prevent or reduce such disadvantages. As a result, the effect of reducing compression power can be surely obtained. As a matter of course, a swirl nozzle may be used as the first atomization mechanism 5.

In the present embodiment, the liquid phase refrigerant stored in the evaporator 2 is supplied to the first atomization mechanism 5 through the first refrigerant supply passage 11. Into the first compressor 3, the mist-like liquid phase refrigerant with a temperature approximately the same as the temperature (saturation temperature) of the gas phase refrigerant sucked into the first compressor 3 is sucked. In this case, flush evaporation of the liquid phase refrigerant and sudden rise of the evaporation amount in the first compressor 3 can be prevented. As a result, increase in compression power caused by the increase in the evaporation amount can be inhibited. Since the increase in the compression power caused by the increase in the evaporation amount can be inhibited, the above-described mechanism can bring the effect of reducing the compression power without greatly decreasing the refrigeration capacity even under operation conditions where compressor input becomes excessively large in overload operation for example. In addition, the first compressor 3 can be prevented from causing choking because of the increase in the evaporation amount.

Several other embodiments are described below. The same references are given to the elements included in common between the first embodiment and each of the other embodiments and the descriptions thereof may be omitted. The descriptions on the embodiments can be applied to each other as long as no technical contradiction arises. As long as no technical contradiction arises, the embodiments can be combined with each other.

### Second Embodiment not in accordance with the present invention

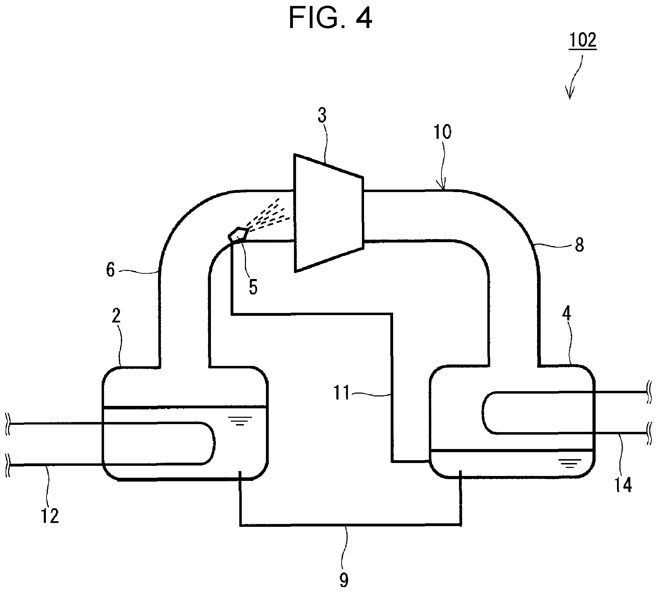

As illustrated in Fig. 4, in a refrigeration cycle apparatus 102 according to the present embodiment, a first refrigerant supply passage 11 connects a condenser 4 with a first atomization mechanism 5. A liquid phase refrigerant sprayed from the first atomization mechanism 5 is the liquid phase refrigerant stored in the condenser 4. Also in the present embodiment, the mechanism described in the first embodiment can bring the effect of reducing compression power. That is, the liquid phase refrigerant to be supplied to the first atomization mechanism 5 is not limited to the liquid phase refrigerant stored in the evaporator 2. As long as the liquid phase refrigerant is in a refrigerant circuit 10, the liquid phase refrigerant can be supplied to the first atomization mechanism 5. When, for example, a buffer tank that is connected to the evaporator 2 or the condenser 4 and stores the liquid phase refrigerant is present as described below, the first refrigerant supply passage 11 may connect the buffer tank with the first atomization mechanism 5 so that the liquid phase refrigerant can be supplied from the buffer tank to the first atomization mechanism 5. Further, the first refrigerant supply passage 11 may branch from a return passage 9. In other words, the return passage 9 may also serve as part of the first refrigerant supply passage 11. In this case, the first refrigerant supply passage 11 guides the liquid phase refrigerant from the condenser 4 to the first atomization mechanism 5.

In the present embodiment, the mist-like liquid phase refrigerant with a temperature higher than the temperature (saturation temperature) of the gas phase refrigerant sucked into a first compressor 3 is sucked into the first compressor 3. In this case, the mechanism described in the first embodiment can bring the effect of reducing compression power while preventing the gas phase refrigerant from being cooled excessively and condensed in the first compressor 3.

The refrigeration cycle apparatus 102 may include a reserve tank that stores the liquid phase refrigerant. The reserve tank is connected to the condenser 4 for example. The liquid phase refrigerant is transferred from the condenser 4 to the reserve tank. The first refrigerant supply passage 11 connects the reserve tank with the first atomization mechanism 5 so that the liquid phase refrigerant is supplied from the reserve tank to the first atomization mechanism 5.

### Third Embodiment according to the present invention

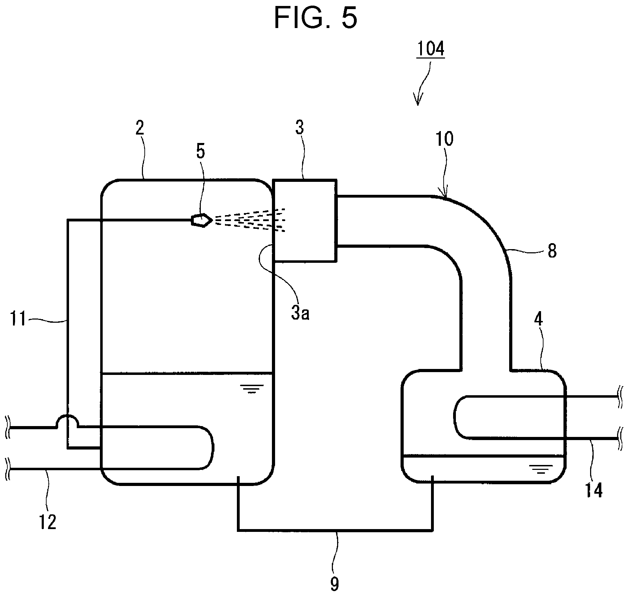

As illustrated in Fig. 5, in a refrigeration cycle apparatus 104 according to the present invention, a first compressor 3 is directly attached to an evaporator 2. The first compressor 3 is directly fixed to the evaporator 2 by flange connection for example. The suction pipe 6 (see Fig. 1) that connects the outlet of the evaporator 2 with an inlet 3a of the first compressor 3 is not provided. A first atomization mechanism 5 is arranged in the evaporator 2 and sprays a liquid phase refrigerant to the inlet 3a of the first compressor 3. For example, in the structure described with reference to Fig. 2, the collision face 19a is directed toward the inlet 3a of the first compressor 3. Specifically, the inlet 3a of the first compressor 3 is present on an extension line of the collision face 19a.

With increase in the refrigeration capacity of the refrigeration cycle apparatus, the volume flow rate of the gas phase refrigerant generated in the evaporator increases as well. When the volume flow rate of the gas phase refrigerant increases, a suction pipe with a diameter that is sufficiently large is needed so as to connect the evaporator with the compressor and enlargement in the size of the refrigeration cycle apparatus is unavoidable. Such a problem appears when a refrigerant whose saturated vapor pressure is a negative pressure is used. In contrast, the refrigeration cycle apparatus 104 can be decreased in size by omitting a suction pipe as in the present embodiment.

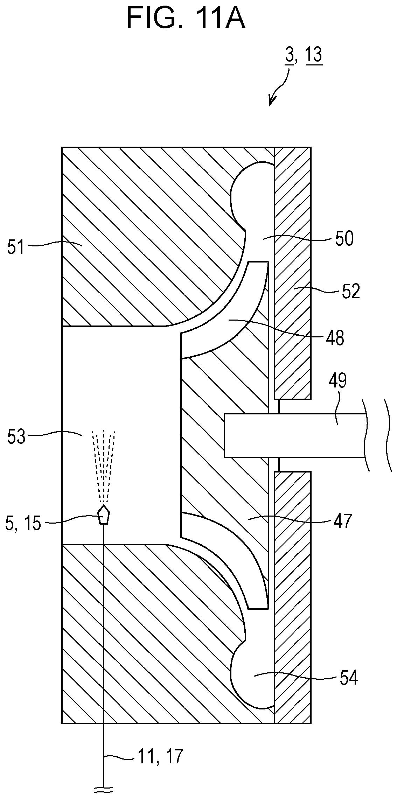

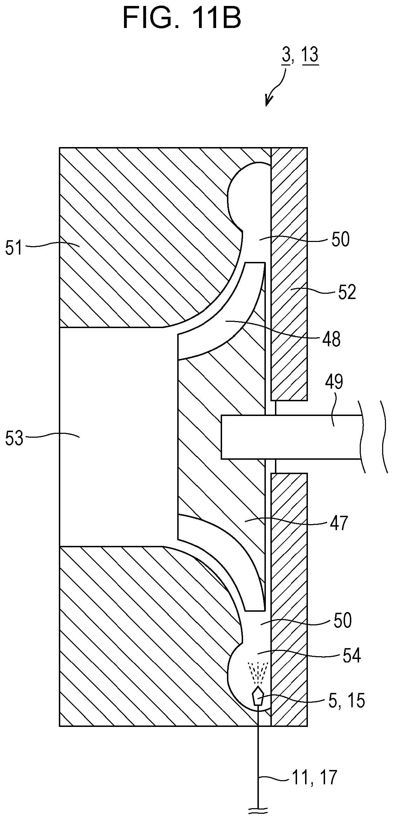

The structure where a suction pipe is omitted can be applied to all the other embodiments of the present disclosure, however, not to the embodiments as shown in Figs. 11A and 11B.

### Fourth Embodiment not in accordance with the present invention

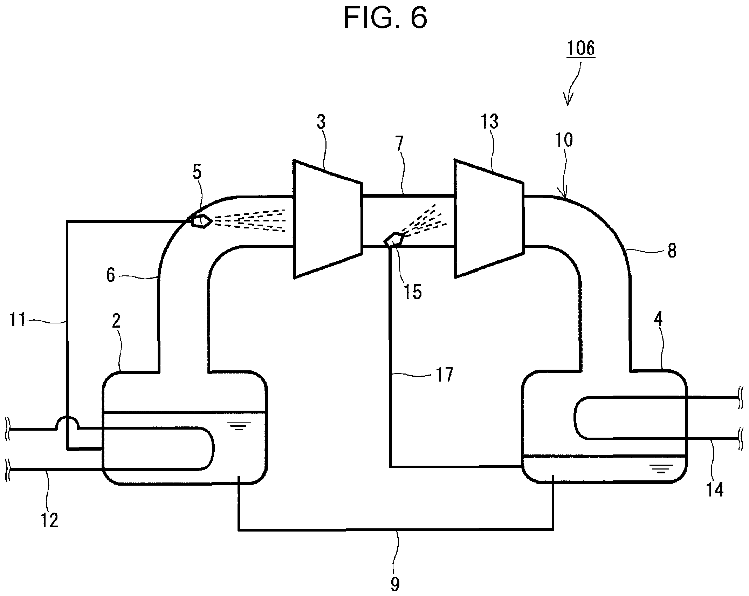

As illustrated in Fig. 6, in addition to the structures in the refrigeration cycle apparatus 100 according to the first embodiment, a refrigeration cycle apparatus 106 according to the present embodiment includes an intermediate passage 7, a second compressor 13, a second atomization mechanism 15, and a second refrigerant supply passage 17.

The refrigeration cycle apparatus 106 is provided with a compressor 3 and the compressor 13 at more than one stage. In the present embodiment, the first compressor 3 is the compressor at the first stage and the second compressor 13 is the compressor at the second stage. The gas phase refrigerant to be sucked into the first compressor 3 is a gas phase refrigerant that is not compressed after being generated in an evaporator 2. The pressure of the gas phase refrigerant sucked into the first compressor 3 is equal to or slightly lower than the pressure of the gas phase refrigerant that fills the inside of the evaporator 2.

The second compressor 13 sucks the gas phase refrigerant compressed in the first compressor 3 and further compresses the gas phase refrigerant. The second compressor 13 is a dynamic compressor for example. The first compressor 3 and the second compressor 13 may be dynamic compressors of the same type or different types. When the first compressor 3 and the second compressor 13 are dynamic compressors of the same type, the first compressor 3 and the second compressor 13 can constitute turbo-compressors at two stages, which include a rotation shaft 49 as a common component. The second compressor 13 may also be a displacement compressor. The first compressor 3 and the second compressor 13 may be displacement compressors of the same type or different types.

The number of stages of the compressors is not limited to two but compressors at three or more stages may be provided. This applies to the other embodiments.

The intermediate passage 7 is a channel that connects the outlet of the first compressor 3 with the inlet of the second compressor 13. The intermediate passage 7 may be a channel formed by the housings of the turbo-compressors at the two stages or formed by at least one pipe. Through the intermediate passage 7, the gas phase refrigerant compressed in the first compressor 3 is transferred to the second compressor 13.

Similar to the first atomization mechanism 5, the second atomization mechanism 15 is a spray nozzle that atomizes and sprays a liquid phase refrigerant. The second atomization mechanism 15 is arranged on a second vapor passage extending from the outlet of the first compressor 3 to the outlet of the second compressor 13. In the present embodiment, the second atomization mechanism 15 is arranged on the intermediate passage 7. The intermediate passage 7 constitutes part of the second vapor passage. That is, the second atomization mechanism 15 is arranged on the second vapor passage and sprays the liquid phase refrigerant into the second vapor passage. The second atomization mechanism 15 is directed, for example, toward the inlet of the second compressor 13. In this case, the mist-like liquid phase refrigerant generated in the second atomization mechanism 15 can be surely sucked into the second compressor 13.

In the present embodiment, the second refrigerant supply passage 17 connects a condenser 4 with the second atomization mechanism 15. Through the second refrigerant supply passage 17, the liquid phase refrigerant stored in the condenser 4 is supplied to the second atomization mechanism 15. The second refrigerant supply passage 17 can be constituted of at least one pipe. In the condenser 4, the inlet of the second refrigerant supply passage 17 is positioned below the liquid level of the liquid phase refrigerant stored in the condenser 4. The second refrigerant supply passage 17 may be provided with a pump, a valve, or the like.

The structure of the second atomization mechanism 15 may be the same as or different from the structure of the first atomization mechanism 5. As the second atomization mechanism 15, the single-fluid atomization nozzle described with reference to Fig. 2 can be used. The spray nozzle that can be used as the first atomization mechanism 5 can also be used as the second atomization mechanism 15.

The present embodiment can bring the effects described below in addition to the effects brought by the first embodiment. Into the second compressor 13, together with the gas phase refrigerant compressed in the first compressor 3, the mist-like liquid phase refrigerant generated in the second atomization mechanism 15 is sucked. When the mist-like liquid phase refrigerant is sucked into the second compressor 13, heat exchange is caused between the gas phase refrigerant with a temperature increased by the second compressor 13 raising the pressure and the mist-like liquid phase refrigerant, and the gas phase refrigerant in an overheated state is continuously cooled through the evaporation of the mist-like liquid phase refrigerant. Thus, increase in the enthalpy of the refrigerant caused by increase in the degree of superheat of the refrigerant in a compression process can be continuously inhibited. The compression power that the second compressor 13 needs can be reduced to be less than the compression power needed in an isentropic compression under complete thermal insulation. The work desired for the second compressor 13 to raise the pressure of the refrigerant to a predetermined pressure can be greatly reduced. That is, the power consumption of the second compressor 13 can be greatly lessened. As a result, the efficiency of the refrigeration cycle apparatus 106 can be increased.

In the present embodiment, the liquid phase refrigerant stored in the evaporator 2 is supplied to the first atomization mechanism 5 through the first refrigerant supply passage 11. Into the first compressor 3, the mist-like liquid phase refrigerant with a temperature approximately the same as the temperature (saturation temperature) of the gas phase refrigerant sucked into the first compressor 3 is sucked. In this case, flush evaporation of the liquid phase refrigerant and sudden rise of the evaporation amount in the first compressor 3 can be prevented.

The saturation temperature corresponding to the pressure of the gas phase refrigerant in the intermediate passage 7 is in a temperature band between the saturation temperature of the refrigerant in the evaporator 2 and the saturation temperature of the refrigerant in the condenser 4. Through the second refrigerant supply passage 17, the liquid phase refrigerant stored in the condenser 4 is supplied to the second atomization mechanism 15. The mist-like liquid phase refrigerant with a temperature equal to or higher than the saturation temperature of the gas phase refrigerant sucked into the second compressor 13 is sucked into the second compressor 13. In this case, the gas phase refrigerant can be prevented from being cooled excessively and being condensed in the second compressor 13. Since the refrigerant can be prevented from condensing in the second compressor 13 even when the refrigeration cycle apparatus 106 is operated under conditions with a small capacity and a high pressure ratio, the second compressor 13 can be prevented from causing surging because of decrease in the evaporation amount.

The refrigeration cycle apparatus 106 according to the present embodiment is provided with the compressors 3 and 13 at two stages. Thus, even under conditions where the outside air temperature is high and a high pressure ratio is desired, the above-described mechanism can bring a sufficient refrigeration capacity while reducing compression power. This effect can be obtained in another embodiment with compressors at a plurality of compressors.

### Fifth Embodiment not in accordance with the present invention

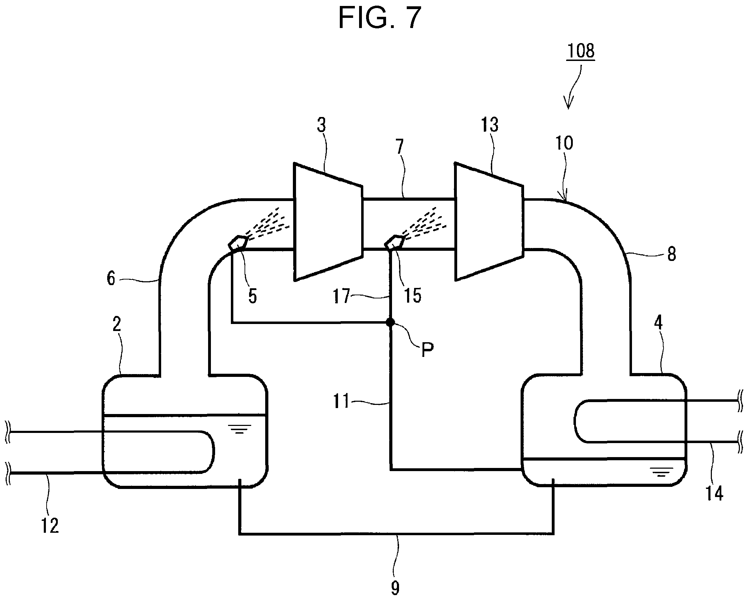

As illustrated in Fig. 7, in addition to the structures in the refrigeration cycle apparatus 100 according to the first embodiment, a refrigeration cycle apparatus 108 according to the present embodiment includes an intermediate passage 7, a second compressor 13, a second atomization mechanism 15, and a second refrigerant supply passage 17. The structures of the intermediate passage 7, the second compressor 13, the second atomization mechanism 15, and the second refrigerant supply passage 17 are described in the fourth embodiment. The present embodiment is different from the fourth embodiment in a first refrigerant supply passage 11 and the second refrigerant supply passage 17.

In the present embodiment, the first refrigerant supply passage 11 connects a condenser 4 with a first atomization mechanism 5. The second refrigerant supply passage 17 connects the condenser 4 with the second atomization mechanism 15. Specifically, the second refrigerant supply passage 17 branches from the first refrigerant supply passage 11 and connects the condenser 4 with the second atomization mechanism 15. The first refrigerant supply passage 11 also serves as part of the second refrigerant supply passage 17. The liquid phase refrigerant sprayed from each of the first atomization mechanism 5 and the second atomization mechanism 15 is the liquid phase refrigerant stored in the condenser 4.

Into a first compressor 3, the mist-like liquid phase refrigerant with a temperature equal to or higher than the saturation temperature of the gas phase refrigerant sucked into the first compressor 3 is sucked. In this case, the gas phase refrigerant can be prevented from being cooled excessively and being condensed in the first compressor 3. Similarly, the mist-like liquid phase refrigerant with a temperature equal to or higher than the saturation temperature of the gas phase refrigerant sucked into the second compressor 13 is sucked into the second compressor 13. In this case, the gas phase refrigerant can be prevented from being cooled excessively and being condensed in the second compressor 13. The mechanism described in the first embodiment can surely bring the effect of reducing compression power to both the first compressor 3 and the second compressor 13.

In the present embodiment, the first refrigerant supply passage 11 can be provided with a pump upstream of a branch position P between the first refrigerant supply passage 11 and the second refrigerant supply passage 17. The pump serves to enable the liquid phase refrigerant to be surely supplied to both the first atomization mechanism 5 and the second atomization mechanism 15. Since the first refrigerant supply passage 11 and the second refrigerant supply passage 17 are not needed to include respective pumps, the present embodiment is advantageous in cost. As a matter of course, the first refrigerant supply passage 11 and the second refrigerant supply passage 17 may each be provided with a pump.

### Sixth Embodiment not in accordance with the present invention

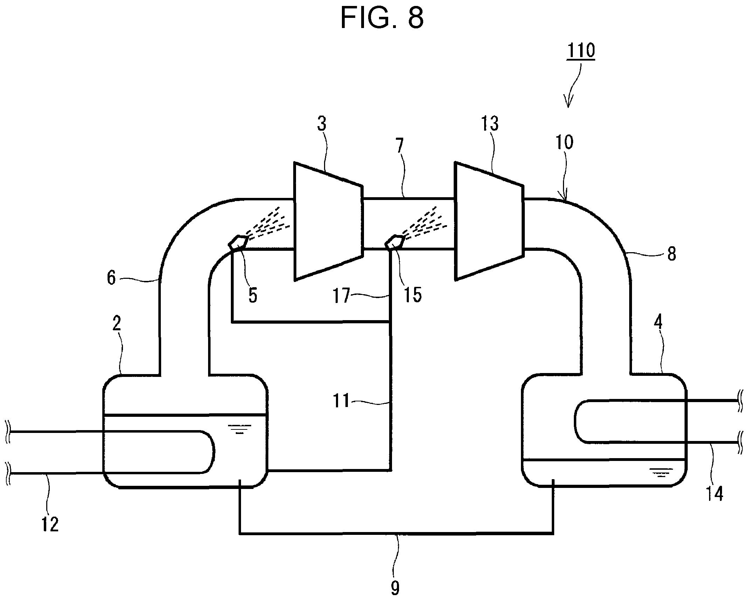

As illustrated in Fig. 8, in addition to the structures in the refrigeration cycle apparatus 100 according to the first embodiment, a refrigeration cycle apparatus 110 according to the present embodiment includes an intermediate passage 7, a second compressor 13, a second atomization mechanism 15, and a second refrigerant supply passage 17. The structures of the intermediate passage 7, the second compressor 13, the second atomization mechanism 15, and the second refrigerant supply passage 17 are described in the fourth embodiment. The present embodiment is different from the fourth embodiment in a first refrigerant supply passage 11 and the second refrigerant supply passage 17.

In the present embodiment, the first refrigerant supply passage 11 connects an evaporator 2 with a first atomization mechanism 5. The second refrigerant supply passage 17 connects the evaporator 2 with the second atomization mechanism 15. Specifically, the second refrigerant supply passage 17 branches from the first refrigerant supply passage 11 and connects the evaporator 2 with the second atomization mechanism 15. The first refrigerant supply passage 11 also serves as part of the second refrigerant supply passage 17. The liquid phase refrigerant sprayed from each of the first atomization mechanism 5 and the second atomization mechanism 15 is the liquid phase refrigerant stored in the evaporator 2.

Into a first compressor 3, the mist-like liquid phase refrigerant with a temperature approximately the same as the temperature (saturation temperature) of the gas phase refrigerant sucked into the first compressor 3 is sucked. In this case, flush evaporation of the liquid phase refrigerant and sudden rise of the evaporation amount in the first compressor 3 can be prevented. As a result, increase in compression power caused by the increase in the evaporation amount can be inhibited. Into the second compressor 13, the mist-like liquid phase refrigerant with a temperature lower than the temperature of the gas phase refrigerant sucked into the second compressor 13 is sucked. In this case, flush evaporation of the liquid phase refrigerant and sudden rise of the evaporation amount in the second compressor 13 can be prevented. Consequently, increase in compression power caused by the increase in the evaporation amount can be inhibited. In addition, the first compressor 3 and the second compressor 13 can be prevented from causing choking because of the increase in the evaporation amount. The mechanism described in the first embodiment can surely bring the effect of reducing compression power to both the first compressor 3 and the second compressor 13.

### Seventh Embodiment not in accordance with the present invention

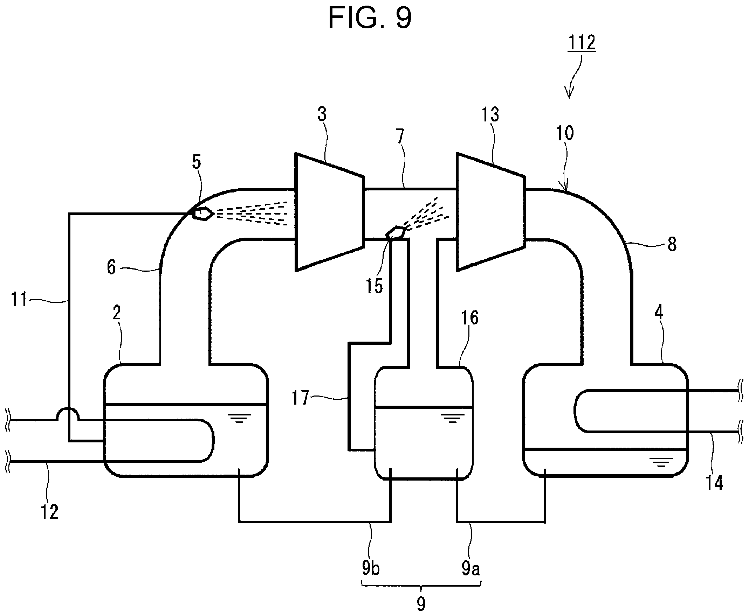

As illustrated in Fig. 9, in addition to the structures in the refrigeration cycle apparatus 100 according to the first embodiment, a refrigeration cycle apparatus 112 according to the present embodiment includes an intermediate passage 7, a second compressor 13, a second atomization mechanism 15, a second refrigerant supply passage 17, and a buffer tank 16. The structures of the intermediate passage 7, the second compressor 13, the second atomization mechanism 15, and the second refrigerant supply passage 17 are described in the fourth embodiment. The present embodiment is different from the fourth embodiment in a return passage 9, the buffer tank 16 (a first buffer tank), and the second refrigerant supply passage 17.

In the present embodiment, the return passage 9 includes an upstream portion 9a and a downstream portion 9b. The upstream portion 9a connects the outlet of a condenser 4 with the inlet of the buffer tank 16. The downstream portion 9b connects the outlet of the buffer tank 16 with the inlet of an evaporator 2. That is, the buffer tank 16 is positioned on the return passage 9 extending from the condenser 4 to the evaporator 2. The buffer tank 16 leads to both the evaporator 2 and the condenser 4.

The buffer tank 16 temporarily stores the liquid phase refrigerant to be transferred from the condenser 4 to the evaporator 2. The buffer tank 16 is further connected to the intermediate passage 7. The buffer tank 16 is constituted of a container for example, which has thermal insulation properties and resistance to pressure. The pressure in the buffer tank 16 is equal to the pressure of the gas phase refrigerant in the intermediate passage 7. The temperature of the liquid phase refrigerant stored in the buffer tank 16 is approximately equal to the saturation temperature corresponding to the pressure of the gas phase refrigerant in the intermediate passage 7.

The second refrigerant supply passage 17 connects the buffer tank 16 with the second atomization mechanism 15. The liquid phase refrigerant sprayed from the second atomization mechanism 15 is the liquid phase refrigerant stored in the buffer tank 16. In the buffer tank 16, the inlet of the second refrigerant supply passage 17 is positioned below the liquid level of the liquid phase refrigerant stored in the buffer tank 16.

Similar to the fourth to sixth embodiments, the present embodiment can also bring the effect of reducing compression power to the second compressor 13. Into the second compressor 13, particles of the liquid phase refrigerant stored in the buffer tank 16 are sucked. The difference between the temperature of the liquid phase refrigerant stored in the buffer tank 16 and the saturation temperature of the gas phase refrigerant in the second compressor 13 is zero or sufficiently small. Thus, the gas phase refrigerant can be prevented from being cooled excessively and being condensed in the second compressor 13, and flush evaporation of the liquid phase refrigerant and sudden rise of the evaporation amount in the second compressor 13 can be prevented. Even under operation conditions where compressor input becomes excessively large in overload operation for example, increase in the evaporation amount and increase in the compression power caused thereby can be inhibited. As a result, increase in the enthalpy of the refrigerant caused by increase in the degree of superheat of the refrigerant in a compression process can be efficiently inhibited and the effect of reducing the compression power can be sufficiently brought to both the first compressor 3 and the second compressor 13.

The first refrigerant supply passage 11 may connect the buffer tank 16 with the first atomization mechanism 5. In this case, the liquid phase refrigerant sprayed from the first atomization mechanism 5 is the liquid phase refrigerant stored in the buffer tank 16. Into the first compressor 3, the mist-like liquid phase refrigerant with a temperature higher than the temperature of the gas phase refrigerant sucked into the first compressor 3 is sucked. In this case, the mechanism described in the first embodiment can surely bring the effect of reducing the compression power while preventing the gas phase refrigerant from being cooled excessively and being condensed in the first compressor 3.

### Eighth Embodiment not in accordance with the present invention

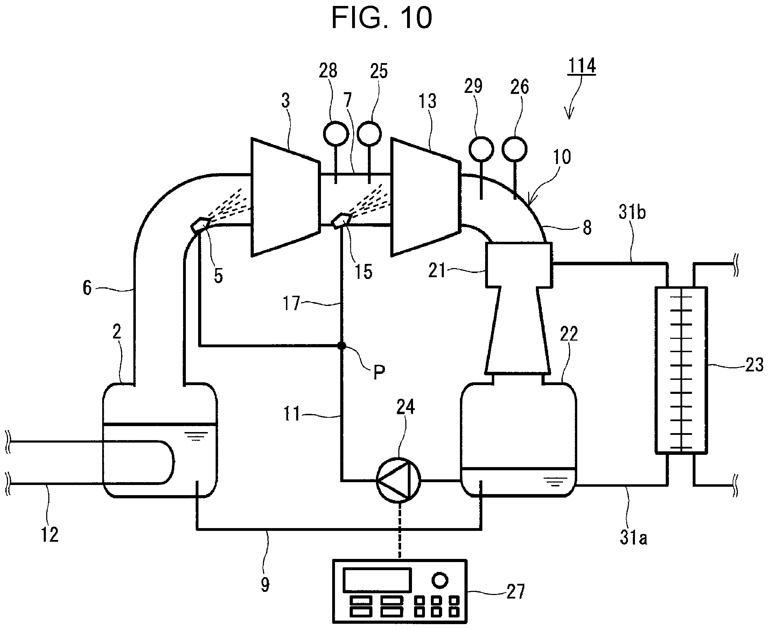

As illustrated in Fig. 10, a refrigeration cycle apparatus 114 according to the present embodiment is a variation of the refrigeration cycle apparatus 108 according to the fifth embodiment. In the refrigeration cycle apparatus 114, an ejector 21, a buffer tank 22 (a second buffer tank), a pipe 31a, a pipe 31b, and a heat exchanger 23 are used instead of the condenser 4. The ejector 21, the buffer tank 22, and the heat exchanger 23 are connected in this order in a loop through the pipe 31a and the pipe 31b. At least one selected from the pipe 31a and the pipe 31b may be provided with a pump.

The ejector 21 is connected to the heat exchanger 23 through the pipe 31b and connected to a second compressor 13 through a discharge pipe 8. The second compressor 13 may be omitted. When the second compressor 13 is omitted, the ejector 21 can be connected to a first compressor 3 through the discharge pipe 8. The liquid phase refrigerant that flows out from the heat exchanger 23 is supplied to the ejector 21 through the pipe 31b as a driving flow. The gas phase refrigerant compressed in the first compressor 3 and the second compressor 13 is supplied to the ejector 21 through the discharge pipe 8 as a suction flow.

The buffer tank 22 is constituted of a container for example, which has thermal insulation properties and resistance to pressure. The buffer tank 22 is connected to the outlet of the ejector 21. A pipe may be provided between the ejector 21 and the buffer tank 22. The liquid phase refrigerant or gas-liquid two-phase refrigerant is supplied from the ejector 21 to the buffer tank 22 and the liquid phase refrigerant is stored in the buffer tank 22. The buffer tank 22 is connected by the pipe 31a to the heat exchanger 23. Through the pipe 31a, the liquid phase refrigerant is transferred from the buffer tank 22 to the heat exchanger 23. The buffer tank 22 is further connected by the return passage 9 to the evaporator 2. Through the return passage 9, the liquid phase refrigerant stored in the buffer tank 22 is transferred to the evaporator 2.

As the heat exchanger 23, a known heat exchanger is employed, such as a fin and tube heat exchanger or a shell and tube heat exchanger. When the refrigeration cycle apparatus 114 is an air conditioner that cools the interior of a room, the heat exchanger 23 is arranged outdoors and the outside air cools the liquid phase refrigerant.

The gas phase refrigerant compressed in the first compressor 3 and the second compressor 13 is sucked into the ejector 21. The buffer tank 22 stores a liquid phase refrigerant. The liquid phase refrigerant is cooled in the heat exchanger 23 to be supplied to the ejector 21. In the ejector 21, the gas phase refrigerant supplied from the second compressor 13 and the liquid phase refrigerant supplied from the heat exchanger 23 are mixed to generate a refrigerant in a gas-liquid two-phase state and the refrigerant in the gas-liquid two-phase state is compressed. The high-temperature liquid phase refrigerant or gas-liquid two-phase refrigerant is discharged from the ejector 21 to be supplied to the buffer tank 22. When the pressure of the refrigerant in the gas-liquid two-phase state is raised in the ejector 21, the gas phase refrigerant condenses and the liquid phase refrigerant is cooled in the heat exchanger 23. As can be understood from the descriptions above, the ejector 21, the buffer tank 22, and the heat exchanger 23 function as a substitute for the condenser 4.

In the present embodiment, increase in the enthalpy of the refrigerant in a compression process can be inhibited through the evaporation of the mist-like liquid phase refrigerant in each of the first compressor 3 and the second compressor 13. Moreover, also in a pressure raising process and a condensation process in the ejector 21, increase in the enthalpy of the refrigerant can be inhibited.

The refrigeration cycle apparatus 114 further includes a pump 24, a controller 27, a first temperature sensor 25, a second temperature sensor 26, a first pressure sensor 28, and a second pressure sensor 29.

In the present embodiment, the first refrigerant supply passage 11 connects the buffer tank 22 and the first atomization mechanism 5. The second refrigerant supply passage 17 connects the buffer tank 22 with the second atomization mechanism 15. Specifically, the second refrigerant supply passage 17 branches from the first refrigerant supply passage 11 and connects the buffer tank 22 with the second atomization mechanism 15. The first refrigerant supply passage 11 also serves as part of the second refrigerant supply passage 17. The liquid phase refrigerant sprayed from each of the first atomization mechanism 5 and the second atomization mechanism 15 is the liquid phase refrigerant stored in the buffer tank 22.

The pump 24 is arranged on the first refrigerant supply passage 11 upstream of a branch position P between the first refrigerant supply passage 11 and the second refrigerant supply passage 17. The pump 24 raises the pressure of the liquid phase refrigerant stored in the buffer tank 22 and supplies the liquid phase refrigerant to each of the first atomization mechanism 5 and the second atomization mechanism 15. The pump 24 serves to enable the liquid phase refrigerant to be surely supplied to both the first atomization mechanism 5 and the second atomization mechanism 15. Since the first refrigerant supply passage 11 and the second refrigerant supply passage 17 are not needed to include respective pumps, the present embodiment is advantageous in cost. As a matter of course, the first refrigerant supply passage 11 and the second refrigerant supply passage 17 may each be provided with the pump 24.

The supply pressure of the pump 24 (the pressure of the liquid phase refrigerant discharged from the pump 24) is 250 kPa for example. The pump 24 may be a displacement pump or be a dynamic pump. The pump 24 is desirably a dynamic pump with excellent cavitation performance. The displacement pump is a pump that sucks and discharges the liquid phase refrigerant according to change in volumetric capacity and raises the pressure of the liquid phase refrigerant. Examples of the displacement pump include a rotary pump, a screw pump, a scroll pump, a vane pump, and a gear pump. The dynamic pump is a pump that raises the pressure of the liquid phase refrigerant by applying momentum to the liquid phase refrigerant and then reducing the speed of the liquid phase refrigerant. Examples of the dynamic pump include a centrifugal pump, a mixed flow pump, and an axial flow pump. As the pump 24, a cascade pump, a Hydrocera pump, or the like can be used. The motor of the pump 24 is driven by for example, the controller 27 that includes an inverter. That is, the number of revolutions of the pump 24 can be regulated by the controller 27.

The first temperature sensor 25 and the first pressure sensor 28 are arranged on an intermediate passage 7. The first temperature sensor 25 detects the temperature of the gas phase refrigerant discharged from the first compressor 3. That is, the first temperature sensor 25 detects the temperature of the gas phase refrigerant in the intermediate passage 7. The first pressure sensor 28 detects the pressure of the gas phase refrigerant discharged from the first compressor 3. That is, the first pressure sensor 28 detects the pressure of the gas phase refrigerant in the intermediate passage 7. The second temperature sensor 26 and the second pressure sensor 29 are arranged in the discharge pipe 8. The second temperature sensor 26 detects the temperature of the gas phase refrigerant discharged from the second compressor 13. That is, the second temperature sensor 26 detects the temperature of the gas phase refrigerant in the discharge pipe 8. The second pressure sensor 29 detects the pressure of the gas phase refrigerant discharged from the second compressor 13. That is, the second pressure sensor 29 detects the pressure of the gas phase refrigerant in the discharge pipe 8. Detection signals of the sensors 25 to 29 are input to the controller 27. When the second compressor 13 is omitted, the second temperature sensor 26 and the second pressure sensor 29 are also omitted.

The controller 27 acquires the detection signals of the sensors 25 to 29 to determine the temperature and pressure of the gas phase refrigerant. The controller 27 controls the number of revolutions of the pump 24 so that the temperature of the gas phase refrigerant converges on a target temperature. Thus, the flow rates of the liquid phase refrigerant sprayed from the first atomization mechanism 5 and the second atomization mechanism 15 are regulated. The target temperature is for example, the saturation temperature determined from the pressures detected by the first pressure sensor 28 and the second pressure sensor 29. When each temperature of the gas phase refrigerant detected by the first temperature sensor 25 and the second temperature sensor 26 is higher than the target temperature, each flow rate of the liquid phase refrigerant sprayed from the first atomization mechanism 5 and the second atomization mechanism 15 is increased. When each temperature of the gas phase refrigerant detected by the first temperature sensor 25 and the second temperature sensor 26 is lower than the target temperature, each flow rate of the liquid phase refrigerant sprayed from the first atomization mechanism 5 and the second atomization mechanism 15 is decreased. When each temperature of the gas phase refrigerant detected by the first temperature sensor 25 and the second temperature sensor 26 is equal to the target temperature, each flow rate of the liquid phase refrigerant sprayed from the first atomization mechanism 5 and the second atomization mechanism 15 is decreased so that the difference between the temperature of the gas phase refrigerant and the target temperature becomes a predetermined temperature difference, which is 0.5°C for example.

By controlling the number of revolutions of the pump 24, the temperature of the gas phase refrigerant discharged from the first compressor 3 can be maintained to be a temperature close to the saturation temperature and the temperature of the gas phase refrigerant discharged from the second compressor 13 can be maintained to be a temperature close to the saturation temperature. Thus, even in a transition period, such as in starting the refrigeration cycle apparatus 114, or when a large change in load arises, increase in the enthalpy of the refrigerant caused by increase in the degree of superheat of the refrigerant in a compression process can be continuously inhibited. The compression power that each of the first compressor 3 and the second compressor 13 needs can be reduced to be less than the compression power needed in an isentropic compression under complete thermal insulation.

In some embodiments, not according to the invention, the first atomization mechanism 5 is arranged in a position from which the liquid phase refrigerant can be sprayed into the suction pipe 6, which is a first vapor passage. In another case, according to the invention, the first atomization mechanism 5 is arranged in the evaporator from which the liquid phase refrigerant can be sprayed to an inlet 3a of the first compressor 3. The second atomization mechanism 15 is arranged in a position from which the liquid phase refrigerant can be sprayed into the intermediate passage 7, which is a second vapor passage. As indicated in variations below, Z not according to the invention, the positions of the first atomization mechanism 5 and the second atomization mechanism 15 are not limited to the above-described positions.

### Variations not according to the invention

In each of the variations illustrated in Fig. 11A and Fig. 11B, a liquid phase refrigerant is sprayed in the first compressor 3. The structures illustrated in Fig. 11A and Fig. 11B can be applied to the second compressor 13, the second atomization mechanism 15, and the second refrigerant supply passage 17.

In the variation illustrated in Fig. 11A, the first atomization mechanism 5 is arranged in a position from which the liquid phase refrigerant can be sprayed into the suction space 53 in the first compressor 3. The first atomization mechanism 5 is arranged in the suction space 53 for example. The suction space 53 constitutes part of the first vapor passage extending from the inlet of the suction pipe 6 to the outlet of the first compressor 3. That is, also in the present variation, the first atomization mechanism 5 is arranged on the first vapor passage extending from the inlet of the suction pipe 6 to the outlet of the first compressor 3. The spray nozzle as the first atomization mechanism 5 faces the impeller 47. The first refrigerant supply passage 11 is connected to the evaporator 2, the condenser 4, the buffer tank 16, and the buffer tank 22.

In the variation illustrated in Fig. 11B, the first atomization mechanism 5 is arranged in a position from which the liquid phase refrigerant can be sprayed into the diffuser 50 or the discharge space 54 in the first compressor 3. The first atomization mechanism 5 is attached to for example, the volute 51 or the housing 52 and directed toward the diffuser 50 or the discharge space 54. The diffuser 50 and the discharge space 54 constitute part of the first vapor passage extending from the inlet of the suction pipe 6 to the outlet of the first compressor 3. That is, also in the present variation, the first atomization mechanism 5 is arranged on the first vapor passage extending from the inlet of the suction pipe 6 to the outlet of the first compressor 3.

The refrigeration cycle apparatuses disclosed in the present disclosure are useful for air conditioners, chillers, or heat accumulators, and particularly for home air conditioners or industrial air conditioners.

## Claims

1. A refrigeration cycle apparatus (104) comprising:
an evaporator (2) that evaporates a liquid phase refrigerant to generate a gas phase refrigerant;
a first compressor (3) that sucks the gas phase refrigerant not compressed after being generated in the evaporator (2);
a condenser (4) that condenses the gas phase refrigerant compressed in the first compressor (3) to generate the liquid phase refrigerant;
a first atomization mechanism (5) that sprays the liquid phase refrigerant to an inlet of the first compressor (3); and
a first refrigerant supply passage (11) that connects the evaporator (2) or the condenser (4) with the first atomization mechanism (5),
wherein the first atomization mechanism (5) is a spray nozzle, such as a single-fluid atomization nozzle, a swirl nozzle, a two-fluid nozzle, or an ultrasonic nozzle,
**characterized in that**
the first compressor (3) is connected to the evaporator (2) directly and the first atomization mechanism (5) is arranged in the evaporator (2).

2. The refrigeration cycle apparatus ( 104) according to claim 1, wherein
the first refrigerant supply passage (11) connects the evaporator (2) with the first atomization mechanism (5), and
the liquid phase refrigerant sprayed from the first atomization mechanism (5) is the liquid phase refrigerant stored in the evaporator (2).

3. The refrigeration cycle apparatus according to claim 1, wherein
the first refrigerant supply passage (11) connects the condenser (4) with the first atomization mechanism (5), and
the liquid phase refrigerant sprayed from the first atomization mechanism (5) is the liquid phase refrigerant stored in the condenser (4).

4. The refrigeration cycle apparatus according to any one of claims 1 to 3, further comprising:
a second compressor (13) that sucks the gas phase refrigerant compressed by the first compressor (3) to further compress the gas phase refrigerant; and
a second atomization mechanism (15) that is arranged on a second vapor passage extending from the outlet of the first compressor (3) to an outlet of the second compressor (13) and sprays the liquid phase refrigerant into the second vapor passage.

5. The refrigeration cycle apparatus according to claim 4, further comprising
a second refrigerant supply passage (17) that connects at least one selected from the evaporator (2), the condenser (4), and a buffer tank (16) leading to each of the evaporator (2) and the condenser (4) and storing the liquid phase refrigerant with the second atomization mechanism (15).

6. The refrigeration cycle apparatus according to claim 5, wherein
the second refrigerant supply passage (17) connects the evaporator (2) with the second atomization mechanism (15), and
the liquid phase refrigerant sprayed from the second atomization mechanism (15) is the liquid phase refrigerant stored in the evaporator (2).

7. The refrigeration cycle apparatus according to claim 5, wherein
the second refrigerant supply passage (17) connects the condenser (4) with the second atomization mechanism (15), and
the liquid phase refrigerant sprayed from the second atomization mechanism (15) is the liquid phase refrigerant stored in the condenser (4).

8. The refrigeration cycle apparatus according to claim 5, wherein
the second refrigerant supply passage (17) connects the buffer tank (16) with the second atomization mechanism (15), and
the liquid phase refrigerant sprayed from the second atomization mechanism (15) is the liquid phase refrigerant stored in the buffer tank (16).

9. The refrigeration cycle apparatus according to claim 5, wherein
the first refrigerant supply passage (11) connects the condenser (4) with the first atomization mechanism (5),
the second refrigerant supply passage (17) branches from the first refrigerant supply passage (11) to connect the condenser (4) with the second atomization mechanism (15), and
the liquid phase refrigerant sprayed from each of the first atomization mechanism (5) and the second atomization mechanism (15) is the liquid phase refrigerant stored in the condenser (4).

## Patentansprüche

1. Kältekreislaufvorrichtung (104), umfassend:
einen Verdampfer (2), der ein flüssigphases Kältemittel verdampft, um ein gasphasiges Kältemittel zu erzeugen;
einen ersten Verdichter (3), der das nicht verdichtete gasphasige Kältemittel ansaugt, nachdem es im Verdampfer (2) erzeugt wurde;
einen Verflüssiger (4), der das in dem ersten Verdichter (3) verdichtete gasphasige Kältemittel verflüssigt, um das flüssigphasige Kältemittel zu erzeugen;
einen ersten Zerstäubungsmechanismus (5), der das flüssigphasige Kältemittel zu einem Einlass des ersten Verdichters (3) sprüht; und
einen ersten Kältemittelzuführdurchlass (11), der den Verdampfer (2) oder den Verflüssiger (4) mit dem ersten Zerstäubungsmechanismus (5) verbindet,
wobei der erste Zerstäubungsmechanismus (5) eine Sprühdüse wie etwa eine Einstoff-Zerstäuberdüse, eine Wirbeldüse, eine Zweistoff-Düse oder eine Ultraschalldüse ist,
**dadurch gekennzeichnet, dass**
der erste Verdichter (3) direkt mit dem Verdampfer (2) verbunden ist und der erste Zerstäubungsmechanismus (5) in dem Verdampfer (2) angeordnet ist.

2. Kältekreislaufvorrichtung (104) nach Anspruch 1, wobei
der erste Kältemittelzuführdurchlass (11) den Verdampfer (2) mit dem ersten Zerstäubungsmechanismus (5) verbindet, und
das von dem ersten Zerstäubungsmechanismus (5) versprühte flüssigphasige Kältemittel das im Verdampfer (2) gespeicherte flüssigphasige Kältemittel ist.

3. Kältekreislaufvorrichtung nach Anspruch 1, wobei
der erste Kältemittelzuführdurchlass (11) den Verflüssiger (4) mit dem ersten Zerstäubungsmechanismus (5) verbindet, und
das von dem ersten Zerstäubungsmechanismus (5) versprühte flüssigphasige Kältemittel das im Verflüssiger (4) gespeicherte flüssigphasige Kältemittel ist.

4. Kältekreislaufvorrichtung nach einem der Ansprüche 1 bis 3, ferner umfassend:
einen zweiten Verdichter (13), der das von dem ersten Verdichter (3) verdichtete gasphasige Kältemittel ansaugt, um das gasphasige Kältemittel weiter zu verdichten; und
einen zweiten Zerstäubungsmechanismus (15), der auf einem zweiten Dampfdurchlass, der vom Auslass des ersten Verdichters (3) zu einem Auslass des zweiten Verdichters (13) verläuft, angeordnet ist und das flüssigphasige Kältemittel in den zweiten Dampfdurchlass sprüht.

5. Kältekreislaufvorrichtung nach Anspruch 4, ferner umfassend
einen zweiten Kältemittelzuführdurchlass (17), der mindestens eines, das aus dem Verdampfer (2), dem Verflüssiger (4) und einem Puffertank (16), der zu jedem von dem Verdampfer (2) und dem Verflüssiger (4) führt und das flüssigphasige Kältemittel speichert, ausgewählt ist, mit dem zweiten Zerstäubungsmechanismus (15) verbindet.

6. Kältekreislaufvorrichtung nach Anspruch 5, wobei
der zweite Kältemittelzuführdurchlass (17) den Verdampfer (2) mit dem zweiten Zerstäubungsmechanismus (15) verbindet, und
das von dem zweiten Zerstäubungsmechanismus (15) versprühte flüssigphasige Kältemittel das im Verdampfer (2) gespeicherte flüssigphasige Kältemittel ist.

7. Kältekreislaufvorrichtung nach Anspruch 5, wobei
der zweite Kältemittelzuführdurchlass (17) den Verflüssiger (4) mit dem zweiten Zerstäubungsmechanismus (15) verbindet, und
das von dem zweiten Zerstäubungsmechanismus (15) versprühte flüssigphasige Kältemittel das im Verflüssiger (4) gespeicherte flüssigphasige Kältemittel ist.

8. Kältekreislaufvorrichtung nach Anspruch 5, wobei
der zweite Kältemittelzuführdurchlass (17) den Puffertank (16) mit dem zweiten Zerstäubungsmechanismus (15) verbindet, und
das von dem zweiten Zerstäubungsmechanismus (15) versprühte flüssigphasige Kältemittel das im Puffertank (16) gespeicherte flüssigphasige Kältemittel ist.

9. Kältekreislaufvorrichtung nach Anspruch 5, wobei
der erste Kältemittelzuführdurchlass (11) den Verflüssiger (4) mit dem ersten Zerstäubungsmechanismus (5) verbindet,
der zweite Kältemittelzuführdurchlass (17) von dem ersten Kältemittelzuführdurchlass (11) abzweigt, um den Verflüssiger (4) mit dem zweiten Zerstäubungsmechanismus (15) zu verbinden, und
das flüssigphasige Kältemittel, das von jedem von dem ersten Zerstäubungsmechanismus (5) und dem zweiten Zerstäubungsmechanismus (15) versprüht wird, das in dem Verflüssiger (4) gespeicherte flüssigphasige Kältemittel ist.

## Revendications

1. Appareil à cycle de réfrigération (104) comprenant :
un évaporateur (2) qui évapore un fluide frigorigène en phase liquide pour générer un fluide frigorigène en phase gazeuse ;
un premier compresseur (3) qui aspire le fluide frigorigène en phase gazeuse non comprimé après avoir été généré dans l'évaporateur (2) ;
un condenseur (4) qui condense le fluide frigorigène en phase gazeuse comprimé dans le premier compresseur (3) pour générer le fluide frigorigène en phase liquide ;
un premier mécanisme d'atomisation (5) qui pulvérise le fluide frigorigène en phase liquide vers une entrée du premier compresseur (3) ; et
un premier passage d'alimentation en fluide frigorigène (11) qui relie l'évaporateur (2) ou le condenseur (4) au premier mécanisme d'atomisation (5),
le premier mécanisme d'atomisation (5) étant une buse de pulvérisation, telle qu'une buse d'atomisation à fluide unique, une buse à tourbillon, une buse à deux fluides ou une buse à ultrasons,
**caractérisé en ce que**
le premier compresseur (3) est relié directement à l'évaporateur (2) et le premier mécanisme d'atomisation (5) est agencé dans l'évaporateur (2).

2. Appareil à cycle de réfrigération (104) selon la revendication 1,
le premier passage d'alimentation en fluide frigorigène (11) reliant l'évaporateur (2) au premier mécanisme d'atomisation (5) et
le fluide frigorigène en phase liquide pulvérisé à partir du premier mécanisme d'atomisation (5) étant le fluide frigorigène en phase liquide stocké dans l'évaporateur (2).

3. Appareil à cycle de réfrigération selon la revendication 1,
le premier passage d'alimentation en fluide frigorigène (11) reliant le condenseur (4) au premier mécanisme d'atomisation (5) et
le fluide frigorigène en phase liquide pulvérisé à partir du premier mécanisme d'atomisation (5) étant le fluide frigorigène en phase liquide stocké dans le condenseur (4).

4. Appareil à cycle de réfrigération selon l'une quelconque des revendications 1 à 3, comprenant en outre :
un second compresseur (13) qui aspire le fluide frigorigène en phase gazeuse comprimé par le premier compresseur (3) pour comprimer davantage le fluide frigorigène en phase gazeuse ; et
un second mécanisme d'atomisation (15) qui est agencé sur un second passage de vapeur s'étendant à partir de la sortie du premier compresseur (3) à une sortie du second compresseur (13) et qui pulvérise le fluide frigorigène en phase liquide dans le second passage de vapeur.

5. Appareil à cycle de réfrigération selon la revendication 4, comprenant en outre
un second passage d'alimentation en fluide frigorigène (17) qui relie au moins un élément choisi parmi l'évaporateur (2), le condenseur (4) et un réservoir tampon (16), menant à chaque élément parmi l'évaporateur (2) et le condenseur (4) et stockant le fluide frigorigène en phase liquide, au second mécanisme d'atomisation (15).

6. Appareil à cycle de réfrigération selon la revendication 5,
le second passage d'alimentation en fluide frigorigène (17) reliant l'évaporateur (2) au second mécanisme d'atomisation (15) et
le fluide frigorigène en phase liquide pulvérisé à partir du second mécanisme d'atomisation (15) étant le fluide frigorigène en phase liquide stocké dans l'évaporateur (2).

7. Appareil à cycle de réfrigération selon la revendication 5,
le second passage d'alimentation en fluide frigorigène (17) reliant le condenseur (4) au second mécanisme d'atomisation (15) et
le fluide frigorigène en phase liquide pulvérisé à partir du second mécanisme d'atomisation (15) étant le fluide frigorigène en phase liquide stocké dans le condenseur (4).

8. Appareil à cycle de réfrigération selon la revendication 5,
le second passage d'alimentation en fluide frigorigène (17) reliant le réservoir tampon (16) au second mécanisme d'atomisation (15) et
le fluide frigorigène en phase liquide pulvérisé à partir du second mécanisme d'atomisation (15) étant le fluide frigorigène en phase liquide stocké dans le réservoir tampon (16).

9. Appareil à cycle de réfrigération selon la revendication 5,
le premier passage d'alimentation en fluide frigorigène (11) reliant le condenseur (4) au premier mécanisme d'atomisation (5),
le second passage d'alimentation en fluide frigorigène (17) se ramifiant à partir du premier passage d'alimentation en fluide frigorigène (11) pour relier le condenseur (4) au second mécanisme d'atomisation (15) et
le fluide frigorigène en phase liquide pulvérisé à partir de chaque élément parmi le premier mécanisme d'atomisation (5) et le second mécanisme d'atomisation (15) étant le fluide frigorigène en phase liquide stocké dans le condenseur (4).
